# FASCICULE DE BREVET EUROPEEN

(11) **EP 0 458 421 B1**
(45) Date de publication et mention de la délivrance du brevet: **06.10.1999**
(21) Numéro de dépôt: 91201606.0
(22) Date de dépôt: 28.03.1988
(51) Int. Cl.: G06K 7/06, G06K 13/08

(54) **Dispositif de lecture/écriture pour cartes à mémoire électronique protégé contre le vandalisme**
Einrichtung zum Lesen/Schreiben elektronischer Speicherkarten, gegen Zerstörungswut geschützt
Reading/writing device for electronic memory cards, protected against tampering

(30) Priorité: 09.04.1987 FR 8704992; 22.10.1987 FR 8714601
(43) Date de publication de la demande: 27.11.1991
(62) Demande divisionnaire de: 88400743.6
(73) Titulaire: SCHLUMBERGER Systèmes, 92120 Montrouge (FR)
(72) Inventeur: Paumard, Maurice, F-78140 Vélizy (FR); Langlais, Joel, F-91370 Verrières (FR)
(74) Mandataire: Dronne, Guy

(56) Documents cités:
- EP-A- 0 134 110
- EP-A- 0 190 527
- DE-A- 3 602 668
- FR-A- 2 477 303

## Description

La présente invention concerne un dispositif de lecture/écriture pour cartes à mémoire électronique protégé contre le vandalisme.

Les cartes à mémoire électronique sont maintenant bien connues. Une telle carte se compose essentiellement d'un corps de carte de forme générale rectangulaire dans lequel est implanté un module électronique. Le module électronique comprend un circuit intégré comportant au moins un circuit mémoire et des plages externes de contact électrique qui sont reliées aux bornes du circuit intégré. Pour exploiter une telle carte on introduit celle-ci dans une machine de traitement. La machine de traitement comprend des circuits de traitement pour exploiter les informations contenues dans la mémoire de la carte et pour modifier ces informations et un dispositif de lecture/écriture qui permet d'assurer une connexion électrique temporaire entre les plages de contact de la carte et les circuits de traitement de la machine. L'établissement de cette connexion sert à alimenter le circuit intégré de la carte, à transmettre les instructions d'écriture/lecture de la mémoire de la carte, à appliquer la tension d'écriture et un signal d'horloge etc...

Un dispositif de lecture/écriture comprend habituellement un boitier qui comporte sur sa face avant une fente d'introduction de la carte et qui définit intérieurement un couloir de guidage servant à positionner la carte de telle manière que, lorsque celle-ci est en position de traitement, c'est-à-dire en position enfoncée, les plages de contact de la carte soient en contact électrique avec un connecteur qui est monté dans le couloir de guidage. En ce qui concerne les cartes à mémoire selon la norme ISO, les plages de contact sont disposées à proximité d'un coin du corps de la carte. Le connecteur du dispositif de lecture/écriture est donc excentré par rapport au plan médian du dispositif de lecture/écriture.

Il existe plusieurs types de dispositif de lecture/écriture. Dans certains d'entre eux la carte ne pénêtre que partiellement dans le couloir de guidage lorsqu'elle est amenée en position de traitement, le déplacement de la carte pouvant être effectué, soit manuellement par l'usager, soit par un moteur entraînant un galet Le dispositif est alors dit "sans avalement". Dans d'autres dispositifs de lecture/écriture la carte pénêtre entièrement dans le couloir de guidage pour arriver en position de traitement, le déplacement de la carte dans les deux sens, étant obtenu par un moteur d'entraînement. Avec le deuxième type de dispositif,qui est dit "à avalement", on est sûr que le détenteur de la carte ne déplacera pas sa carte pendant le traitement de celle-ci. En revanche si les moyens de déplacement de la carte deviennent défaillants, la carte reste bloquée dans le couloir de guidage ce qui est dommageable pour le titulaire de la carte et pour la société gérant le dispositif de lecture/écriture puisque celle-ci devient inutilisable jusqu'à ce qu'on ait procédé à sa réparation.

En outre beaucoup d'usagers voient avec réticence leur carte entièrement avalée par le dispositif de lecture. Avec le premier type de dispositif de lecture/écriture ce risque et cette crainte n'existent pas puisqu'une partie du corps de la carte fait toujours saillie à l'extérieur du lecteur de cartes. Cependant les deux types de dispositifs de lecture/écriture peuvent faire l'objet d'actes de malveillance visant à en interdire le fonctionnement. Un de ces actes les plus fréquents consiste dans l'introduction dans le couloir de guidage du dispositif de lecture/écriture d'une partie d'un corps de carte authentique mais qui a été coupé de telle manière que sa longueur soit un peu inférieure à la longueur du couloir de guidage, dans le cas d'un lecteur du premier type, et un peu inférieure à la course de la carte dans le cas d'un lecteur du deuxième type. Dans les deux cas, les usagers se présentant après l'accomplissement de cet acte de malveillance ne pourront pas utiliser le dispositif de lecture/écriture puisque la portion de corps de carte ne peut pas être extraire du couloir de guidage. Cela nécessite l'intervention d'une équipe de maintenance et interdit le fonctionnement du dispositif de lecture/écriture pour un temps non négligeable.

Une autre forme de vandalisme consiste à détériorer les contacts électriques de la tête de lecture/écriture du dispositif. Pour cela, il suffit de faire pénétrer dans la fente d'introduction, à la place d'une carte, une lame métallique ou un objet similaire, et de briser ou de déformer les contacts électriques. En effet, le plus souvent, ceux-ci font saillie dans le couloir de guidage.

Le document DE 36 02 668 décrit un lecteur de cartes dans lequel la carte est placée sur un chariot mobile en translation. Lorsque le chariot arrive en position de lecture, il se soulève légèrement pour appliquer les contacts de la carte sur la tête de lecture, ce qui entraîne une légère courbure du corps de la carte.

Un objet de l'invention est de fournir un dispositif de lecture/écriture pour cartes à mémoire électronique qui permette d'empêcher ces actes de vandalisme ou du moins de les rendre plus difficiles.

Pour atteindre ce but, l'invention concerne un dispositif de lecture/écriture selon la revendication 1.

L'invention sera mieux comprise à la lecture de la description qui suit de plusieurs modes de mise en oeuvre de l'invention donnés à titre d'exemples non limitatifs.

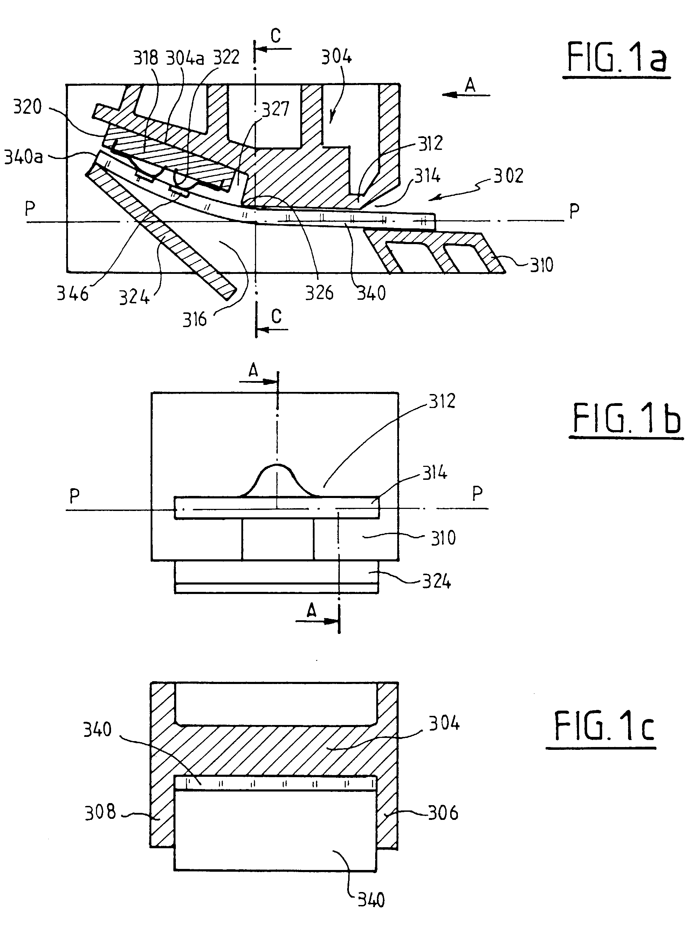

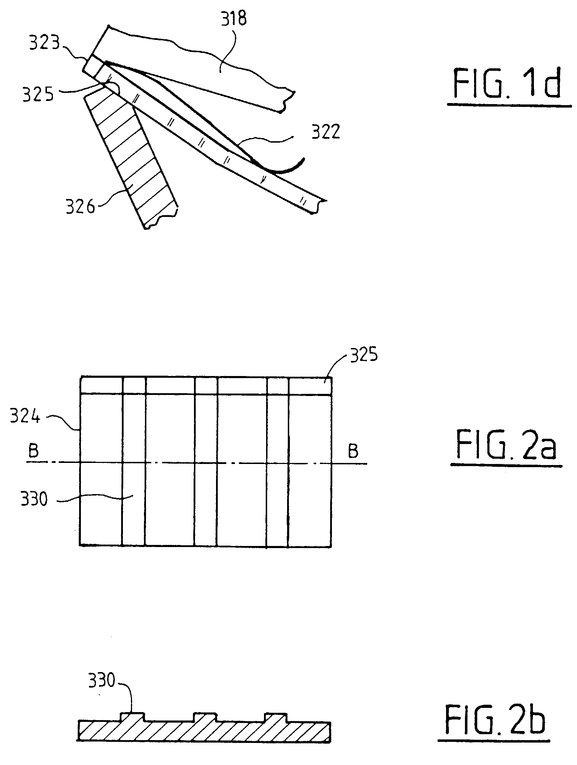

La description se réfère au dessin annexé sur lequel :
- la figure la est une vue en coupe longitudinale, selon le plan A-A de la figure 1b, d'un mode de réalisation du dispositif de lecture/écriture ;
- la figure 1b est une vue de face du dispositif de lecture/écriture de la figure 1a ;
- la figure 1c est une vue en coupe verticale selon la ligne C-C de la figure la d'un mode de réalisation du dispositif de lecture/écriture ;
- la figure ld est une vue de détail de la figure 1a ; et
- les figures 2a et 2b montrent une variante de réalisation du lecteur des figures la à ld respectivement en vue de face et en coupe selon la ligne B-B de la figure 2a.

Dans la suite de la description, on appellera "lecteur de cartes" le dispositif de lecture et/ou d'écriture pour cartes à mémoire électronique.

Les figures la à ld montrent un mode de réalisation du lecteur de cartes. Il comporte un boîtier 302 formé par une cloison supérieure 304, deux cloisons latérales 306 et 308 et une portion de cloison inférieure 310. Les deux cloisons latérales 306 et 308 sont séparées par une distance sensiblement égale à la largeur du corps de carte. La face supérieure 310a de la cloison inférieure 310 et la partie frontale 312 de la cloison supérieure 304 définissent entre les cloisons latérales une fente d'introduction 314 pour la carte. La fente 314 permet d'introduire la carte dans la cavité 316 définie par le boîtier, la cavité 316 ne comportant pas de fond.

Sur la face interne inclinée 304a de la cloison 304 est fixée une tête de lecture 318 identique à celles des figures 6a et 6B de la demande de base EP-A-0 287 417. Sur la figure 1a on a seulement montré le support isolant 320 et les lames conductrices 322 de la tête de lecture ainsi qu'une butée mécanique 323 mieux visible sur la figure 1d. En regard de la tête de lecture 318 la cavité 316 comprend une cloison sensiblement plane inclinée 324 dont les bords sont solidaires des cloisons latérales 306 et 308 du boîtier. La cloison 324 présente une inclinaison supérieure à celle de la tête de lecture 308. De préférence la cloison 316 se termine par un biseau 325 qui a une inclinaison plus faible de la face principale de la cloison 326, comme le montre la figure 1d.

Lorsque l'usager introduit sa carte 340 dans la fente 314, celle-là pénètre dans la cavité 316 guidée par les cloisons latérales 306 et 308 et par la portion de cloison inférieure 310. Lorsque le bord avant 340a du corps de carte arrive en contact avec la cloison inclinée 324, la pente de la cloison est telle que, lorsque l'usager continue à pousser sa carte, le corps de carte continue à avancer dans la cavité 316 en prenant une courbure par rapport au plan horizontal P-P d'introduction de la carte, comme le montre la figure 1a. La carte continue à progresser jusqu'à ce que son bord 340a soit bloqué par la butée mécanique 323.

La courbure du corps de carte est contrôlée par une portée plane 326 formant un décrochement 327 dans la cavité 316 à partir de la cloison supérieure 304. Dans cette position les plages de contact 346 de la carte sont connectées aux lames conductrices 322 de la tête de lecture.

Il faut souligner que le biseau 325 permet à l'usager de "sentir" que la carte va arriver en butée sur la butée mécanique 323.

Selon la variante de réalisation des figures 2 a et 2 b la face de la cloison 324 sur laquelle frotte le bord avant 340a de la carte est toujours sensiblement plane mais elle comporte des nervures 330 disposées selon la direction d'introduction de la carte et qui forment une très légère saillie par rapport à la face principale de la cloison 324. On comprend qu'ainsi, si un objet est introduit par malveillance dans le lecteur pour tenter de déteriorer les lames de contact, cet objet ne pourra guère être déplacé selon une direction perpendiculaire à la direction d'introduction, l'amplitude de ce mouvement étant limité à la distance qui sépare deux nervures consécutives 330. Il sera donc encore plus difficile d'abimer les contacts.

En outre, il va de soi qu'il n'est pas nécessaire que la cloison 324 occupe toute la largeur de la cavité 316 il suffit que la cloison ait une largeur suffisante pour guider l'extrémité du corps de carte et lui donner la flexion nécessaire. La cloison 324 pourrait également consister en plusieurs éléments de cloison parallèles séparées par des intervalles, les éléments de cloison étant tous disposés dans un même plan.

La courbure prise par la portion avant du corps de carte remplit plusieurs fonctions. D'une part elle rigidifie la portion du corps de carte en contact avec le tête de lecture ce qui assure un bon contact électrique entre la carte et la tête de lecture bien que la carte ne s'appuie sur aucune cloison dans la portion portant les plages de contacts. De plus la carte en se déformant vient se plaquer sur les contacts du connecteur, la course de frottement étant très réduite mais suffisante pour assurer un auto nettoyage des contacts en raison de la forte inclinaison de la cloison 324 qui est de l'ordre de 36degrés. Il en va de même pour les modes de réalisation des figures 5 et 6. D'autre part cette courbure assure une immobilisation convenable de la carte durant la phase de traitement de celle-ci.

Le lecteur de cartes permet effectivement d'éviter les actes de vandalisme. En effet, la cavité 316 ne comportant pas de fond, des objets introduits par malveillance dans le lecteur tombent. De plus le tête de lecture 318 est disposée derrière la partie supérieure 326 dans le décrochement 327, il n'est donc pas possible, ou pour le moins très difficile d'introduire par la fente 314 un objet rigide pour tenter de detérriorer les lames conductrices de la tête de lecture 318.

## Revendications

1. Dispositif de lecture/écriture pour des cartes à mémoire électronique comprenant un corps de carte (340) et des plages de contact électrique (346) disposées dans une des faces principales dudit corps de carte, ledit dispositif comprenant un boîtier (302) muni d'une ouverture frontale (314) pour permettre l'introduction de ladite carte dans ledit boîtier ; une tête de lecture/écriture (318) comprenant des éléments de connexion (322) disposée à l'intérieur dudit boîtier ; des moyens de guidage de ladite carte pour guider celle-ci entre ladite ouverture frontale et une position de traitement dans laquelle lesdites plages de contact sont aptes à entrer en contact avec lesdits éléments de connexion de ladite tête de lecture/écriture, des moyens de maintien de la portion dudit corps de carte comportant lesdites plages de contact lorsque ladite carte est en position de traitement, lesdits moyens de maintien comprenant des moyens (324, 310) pour supporter les extrémités de la face inférieure dudit corps de carte lorsque ladite carte est en position de lecture et des moyens fixes (326) coopérant avec lesdits moyens de supportage pour provoquer une courbure de la portion du corps de carte portant lesdites plages de contact électrique (346) par quoi lesdites plages de contact électrique (346) sont appliquées contre les éléments de connexion (322) de ladite tête de lecture/écriture lorsque ladite carte est en position de lecture, caractérisé en ce que lesdits moyens de supportage sont des moyens fixes (324, 310), ledit boîtier (302) étant totalement dépourvu de fond entre lesdits moyens de supportage.

2. Dispositif de lecture/écriture selon la revendication 1, caractérisé en ce que lesdits moyens pour provoquer la courbure du corps de carte comprennent une cloison (324) sensiblement plane inclinée par rapport à la direction d'introduction de la carte et disposée sensiblement en regard de la tête de lecture/écriture (318), la distance selon la direction d'introduction de la carte entre ladite ouverture frontale (314) et ladite cloison (324) étant inférieure à la dimension de ladite carte (340) selon ladite direction.

3. Dispositif de lecture/écriture selon l'une quelconque des revendications 1 et 2, caractérisé en ce que ladite ouverture frontale (314) a la forme d'une fente dont la hauteur est sensiblement égale à l'épaisseur du corps de carte, et en ce que ledit boîtier (302) définit une cavité interne (316) dépourvue de fond dans laquelle est disposée ladite cloison (324) inclinée ainsi qu'un autre élément de cloison (326) sur lequel s'appuie la face du corps de carte portant les plages de contact lorsque ledit corps de carte (340) subit ladite courbure.

4. Dispositif selon l'une quelconque des revendications 2 et 3, caractérisé en ce que ladite cloison inclinée (324) comporte au moins une nervure (330) disposée selon la direction d'introduction de ladite carte.

## Patentansprüche

1. Schreib-/Leseeinrichtung für elektronische Speicherkarten mit einem Kartenkörper (340) und auf einer der Hauptseiten des Kartenkörpers angeordneten elektrischen Kontaktbereichen (346), wobei die Einrichtung versehen ist mit einem Gehäuse (302) mit einer vorderen Öffnung (314), damit die Karte in das Gehäuse eingeführt werden kann; einem Schreib-/Lesekopf (318) mit im Inneren des Gehäuses angeordneten Verbindungselementen (322); Kartenführungsmitteln zum Führen dieser Karte zwischen der vorderen Öffnung und einer Bearbeitungsposition, in der die Kontaktbereiche mit den Verbindungselementen des Schreib-/Lesekopfs in Kontakt gelangen können, Halteeinrichtungen für den Abschnitt des Kartenkörpers, der die Kontaktbereiche aufweist, wenn die Karte in Bearbeitungsposition ist, wobei die Halteeinrichtungen Einrichtungen (324, 310) aufweisen, die die Enden der Unterseite des Kartenkörpers stützen, wenn sich die Karte in Leseposition befindet, und festen Einrichtungen (326), die mit den Stützeinrichtungen zusammenwirken und eine Krümmung des Körperanteils der Karte bewirken, der die elektrischen Kontaktbereiche (346) trägt, wodurch die elektrischen Kontaktbereiche gegen die Verbindungselemente (322) des Schreib-/Lesekopfes gedrückt werden, wenn der Kartenkörper in Leseposition ist, dadurch gekennzeichnet,
daß die Stützeinrichtungen feste Einrichtungen (3, 24, 13) sind, wobei das Gehäuse (302) zwischen den Stützeinrichtungen überhaupt keinen Boden aufweist.

2. Schreib-/Leseeinrichtung nach Anspruch 1, dadurch gekennzeichnet, daß die Einrichtungen, die die Krümmung des Kartenkörpers bewirken, eine im wesentlichen ebene Trennwand (324) aufweisen, die gegenüber der Einführungsrichtung der Karte abgeschrägt ist und im wesentlichen gegenüber dem Schreib-/Lesekopf (318) angeordnet ist, wobei die Entfernung in Einführungsrichtung der Karte zwischen der vorderen Öffnung (314) und der Trennwand (324) geringer ist als die Größenabmessung der Karte (340) in dieser Richtung.

3. Lese-/Schreibeinrichtung nach einem der Ansprüche 1 oder 2, dadurch gekennzeichnet, daß die vordere Öffnung die Form eines Spaltes aufweist, dessen Höhe im wesentlichen gleich der Dicke des Kartenkörpers ist, und daß das Gehäuse (302) einen inneren Hohlraum (316) ohne Boden definiert, in dem die abgeschrägte Trennwand (324) angeordnet ist und ein weiteres Trennelement (326), auf das sich die Seite des Kartenkörpers abstützt, die die Kontaktbereiche trägt, wenn die Krümmung des Kartenkörpers (340) bewirkt wird.

4. Vorrichtung nach einem der Ansprüche 2 oder 3, dadurch gekennzeichnet, daß die schräge Trennwand (324) wenigstens eine Rippe (330) aufweist, die in Einführungsrichtung der Karte angeordnet ist.

## Claims

1. Read/write device for electronic memory cards, comprising a card body (340) and electrical contact tabs (346) disposed in one of the main faces of the said card body, the said device comprising a housing (302) provided with a front opening (314) for the insertion of the said card into the said housing, a read/write head (318) comprising connecting elements (322) disposed in the interior of the said housing, guide means for the said card in order to guide the latter between the said front opening and a processing position in which the said contact tabs are capable of coming into contact with the said connecting elements of the said read/write head, means for holding the portion of the said card body having the said contact tabs when the said card is in the processing position, the said holding means comprising means (324, 310) for supporting the ends of the lower face of the said card body when the said card is in the reading position and fixed means (326) cooperating with the said supporting means in order to curve the portion of the card body carrying the said electrical contact tabs (346), by which means the said electrical contact tabs (346) are pressed against the connecting elements (322) of the said read/write head when the said card is in the reading position, characterised in that the said supporting means are fixed means (324, 310), the said housing (302) being completely without a bottom between the said supporting means.

2. Read/write device according to claim 1, characterised in that the said means for curving the card body comprise a substantially plane partition (324) inclined with respect to the direction of insertion of the card and disposed substantially opposite the read/write head (318), the distance between the said front opening (314) and the said partition (324) in the direction of insertion of the card being less than the dimensions of the said card (340) in the said direction.

3. Read/write device according to either of claims 1 and 2, characterised in that the said front opening (314) is in the form of a slot, the height of which is substantially equal to the thickness of the card body, and in that the said housing (302) defines an intemal cavity (316) without a bottom in which are disposed the said inclined partition (324) and another partition element (326) against which the face of the card body carrying the contact tabs bears when the said curvature is imposed upon the said card body (340).

4. Device according to either of claims 2 and 3, characterised in that the said inclined partition (324) has at least one rib (330) disposed in the direction of insertion of the said card.
